# EUROPEAN PATENT SPECIFICATION

(11) **EP 4 296 765 B1**
(45) Date of publication and mention of the grant of the patent: **05.11.2025**
(21) Application number: 23179946.1
(22) Date of filing: 19.06.2023
(51) Int. Cl.: G02F 1/1334, G02F 1/137

(54) **LIQUID CRYSTAL/POLYMER COMPOSITE ELECTRICALLY CONTROLLED DIMMING FILMS AND PREPARATION METHOD THEREOF**
ELEKTRISCH GESTEUERTE ABBLENDFILME AUS FLÜSSIGKRISTALL-/POLYMERVERBUND UND HERSTELLUNGSVERFAHREN DAFÜR
FILMS DE GRADATION À COMMANDE ÉLECTRIQUE COMPOSITES À CRISTAUX LIQUIDES/POLYMÈRE ET LEUR PROCÉDÉ DE PRÉPARATION

(30) Priority: 20.06.2022 CN 202210696701
(43) Date of publication of application: 27.12.2023
(73) Proprietor: Peking University, Beijing 100871 (CN)
(72) Inventor: Yang, Huai, Beijing, 100871 (CN); Wang, Xiao, Beijing, 100871 (CN); Zhang, Lanying, Beijing, 100871 (CN)
(74) Representative: Zaboliene, Reda

(56) References cited:
- CN-A- 108 663 828
- CN-B- 110 596 961

## Description

### CROSS-REFERENCE TO RELATED APPLICATIONS

This application claims priority to Chinese Patent Application No. 202210696701.8, filed on June 20, 2022 and International Application No. PCT/CN2022/104274, filed on July 7, 2022.

### TECHNICAL FIELD

The present disclosure relates to the field of optical films, and specifically to a liquid crystal/polymer composite electrically controlled dimming film and a preparation method thereof.

### BACKGROUND

For practical application of liquid crystals, it can be made in two major fields, namely in display screens and in optical films. In a process of preparing the optical films, composite material films can be prepared by combing liquid crystals and polymer materials to achieve roll-to-roll large scale processing. Based on this, the composite films exhibit both excellent external field response characteristics of the liquid crystals and excellent mechanical properties of the polymers. At present, there are mainly two types of electrically controlled dimming films, one is the polymer dispersed liquid crystal (PDLC) film, and the other is the polymer stabilized liquid crystal (PSLC) film.

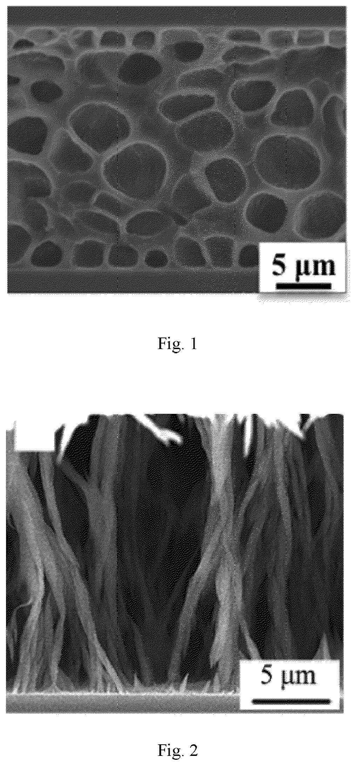

In the PDLC film, liquid crystals are dispersed in a polymer matrix in a form of droplets. As a dimming film, the PDLC film has been on the market for many years, and there are companies producing and selling the film in the United States, Japan, and China. The prepared PDLC film usually presents a light scattering state due to refractive index mismatch between the polymer matrix and unoriented liquid crystals, as well as refractive index mismatch between liquid crystal molecules. When applied with an appropriate electric field, the film may show a state of light transmission, that is, a transparent state, due to a fact that the liquid crystal molecules vertically oriented under an electric field and liquid crystal micro regions are transparent, while the refractive index of the liquid crystal molecules matches that of the polymer matrix when observed along a long axis of the liquid crystal molecules. The film is mainly prepared by mixing the non-liquid crystal polymerizable monomer and liquid crystals to obtain a homogeneous mixture solution, and sandwiching the mixture solution between two layers of Indium Tin Oxide (ITO) conductive plastic films, and then initiating polymerization of photopolymerizable monomers or thermally polymerizable monomers through irradiation of ultraviolet light or heating. After the polymerization, a phase separation structure of the polymer matrix and the liquid crystals is formed. Specifically, the liquid crystals are dispersed in the polymer matrix in the form of micro droplets, and the polymer matrix has a porous microstructure (as shown in FIG. 1). At present, the PDLC film has a broad application prospect in many fields, such as architectural and automotive doors and windows, architectural partitions, smart privacy screens, projection screens, and touch screens.

The PDLC system generally has a high amount of the polymer matrix such as at least 10%, or even higher than 40%, which makes the PDLC film have a high peel strength between two substrates to achieve roll-to-roll continuous processing of the film. However, a driving voltage of the PDLC film is high due to strong binding effect of the polymer matrix boundary has on the liquid crystal molecules. A driving voltage of a commercial PDLC film is usually above 60 volts, which limits application of PDLC films in fields such as display.

A polymer stabilized liquid crystal film material is a film material that can stabilize a certain orientation of liquid crystal molecules, or a film material that has a tendency to make liquid crystal molecules form a certain orientation, for which polymer networks with same arrangement as the orientation of liquid crystal molecules is generally formed by compounding liquid crystalline polymerizable monomers with liquid crystals, and initiating the polymerization of liquid crystalline polymerization monomers through irradiation of ultraviolet light or heating, etc., so that a certain orientation of liquid crystal molecules can be stabilized or the liquid crystal molecules tend to form a certain orientation. For example, the PSLC film with planar oriented polymer networks can be prepared by mixing the liquid crystalline polymerizable monomers with cholesteric liquid crystals, performing planar orientation treatment, and polymerizing. The PSLC film with vertically oriented polymer networks (as shown in FIG. 2) can be prepared by mixing liquid crystalline polymerizable monomers and nematic liquid crystals, performing vertical orientation treatment, and polymerizing.

The driving voltage of the PSLC film is relatively low, generally several volts. Therefore, the PSLC film has been widely applied in the field of some functional liquid crystal devices. However, an amount of polymer networks in the PSLC film is low, generally below 10%, resulting in low peel strength between the two substrates of the PSLC film, which makes it difficult to prepare the film on large-are a flexible substrate, thus limiting the application scope of the PSLC film. Although the PSLC material with a high amount of polymer networks can be prepared, the PSLC material has a single function, such as inability of being driven using an electric field, which limits its application.

Therefore, it is necessary to provide a liquid crystal/polymer composite electrically controlled dimming film and a preparation method thereof, such that the dimming film has both mechanical processing properties of the PDLC film and a low driving voltage of the PSLC film.

CN_110596961B discloses an electric control dimming film and preparation method thereof.

CN_108663828A discloses an electrically controlled dimming film and preparing method thereof.

### SUMMARY

In an aspect of the present disclosure, a liquid crystal/polymer composite electrically controlled dimming film as defined in appended claim 1 is provided.

In some embodiments, the liquid crystal material includes one or more of a molecular structure (1): 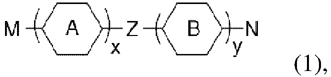 where M and N are alkyl groups containing 1-20 carbon atoms, alkoxy groups containing 1-20 carbon atoms, or siloxane group, cyan group, ester group, halogen, isothiocyano group, or nitro group containing 1-20 carbon atoms. A and B are aromatic rings or alicyclic alkane containing at least one of a benzene ring, a six-membered ring, a six-membered heterocyclic ring, a five-membered ring, a five-membered heterocyclic ring, a biphenyl, a terphenyl, a naphthalene ring. A and B are connected by a covalent bond or a linking group Z. A and B contain side groups or do not contain side groups, and the side groups are halogen, cyan group, or methyl. X and y are values in a range of 0-4. Z is an ester group, an alkynyl group, an alkane group, a nitrogen-nitrogen double bond, or an ether bond.

In some embodiments, a pore size of a micropore in the polymer matrix may be within a range of 0.1 microns-100 microns.

In some embodiments, the conductive substrate includes a conductive film or a glass substrate containing metal compounds including Indium tin oxide (ITO), silver, and aluminum.

In a further aspect of the present disclosure a preparation method of a liquid crystal/polymer composite electrically controlled dimming as defined in appended claim 5 is provided.

In some embodiments, the radical photopolymerizable monomer is one or more of an acrylate monomers or a vinyl monomer that is capable of being radically polymerized under irradiation of ultraviolet light. The cationic photopolymerizable monomer is one or more of a vinyl monomer, a vinyl ether monomer, and an epoxy monomer that is capable of being cationic polymerized under the irradiation of ultraviolet light. The rod-shaped radical photopolymerizable monomer is one or more of rod-shaped acrylate monomers or rod-shaped vinyl monomers that is capable of being radically polymerized under irradiation of ultraviolet light. The rod-shaped cationic photopolymerizable monomer is one or more of a rod-shaped epoxy monomer, a rod-shaped vinyl ether monomer, and a rod-shaped vinyl monomer that is capable of being cationic polymerized under irradiation of ultraviolet light. The thermally polymerizable monomer is a mixture of an epoxy monomer and a thiol or amine monomer that is capable of being thermally polymerized under a heating condition, or a mixture of a monomer containing an amino, a hydroxyl, a carboxyl, or a mercapto and an isocyanate monomer. The rod-shaped thermally polymerizable monomer is a mixture of the rod-shaped epoxy monomer and rod-shaped thiol monomer or rod-shaped amine monomer that is capable of being thermally polymerized under the heating condition, or a mixture of a rod-shaped monomer containing the amino, the hydroxyl, the carboxyl, or the mercapto and a rod-shaped isocyanate monomer.

In some embodiments, the liquid crystal material, the first polymerizable monomer, and the second polymerizable monomer may be of 10.0-95.0 parts by weight, 5.0-80.0 parts by weight, and 0.1-40.0 parts by weight, respectively.

### BRIEF DESCRIPTION OF THE DRAWINGS

The present disclosure may be further illustrated by way of exemplary embodiments, which may be described in detail with the accompanying drawings. These embodiments are not limiting, and in these embodiments, same numbers indicate similar structures.
FIG. 1 is a scanning electron microscopic image of a porous polymer matrix of a PDLC of related art;
FIG. 2 is a scanning electron microscopic image of vertically oriented polymer networks of a PSLC of related art;
FIG. 3 is a schematic diagram illustrating preparing of a polymer matrix by photopolymerization and preparing of polymer networks by thermal polymerization according to some embodiments of the present disclosure;
FIG. 4 shows structural formulas of an acrylate monomer including a hydroxypropyl methacrylate (HPMA), a lauryl methacrylate (LMA), a polyethylene glycol diacrylate (PEGDA600), a bisphenol A ethoxylatedimethacrylate (Bis-EMA15) according to some embodiments of the present disclosure;
FIG. 5 shows structural formulas of an epoxy monomer including a N,N'-bis(2,3-epoxypropoxy)aniline (NDGA), a polypropylene glycol diglycidyl ether (PGDE), a bisphenol A epoxy resin (E44)and a thiol monomer including a thiol monomer (Capure3800) according to some embodiments of the present disclosure;
FIG. 6 shows a structural formula of a rod-shaped epoxy monomer including a 2-methyl-1,4-phenylene bis(4-(4-(epoxy-2-yl) butoxy) benzoate) (referred to as E4M) according to some embodiments of the present disclosure;
FIG. 7 shows a structural formula of a rod-shaped thiol monomer including a 2-methyl-1,4-phenylenebis(4-(4-mercaptobutoxy) benzoic acid) (referred to as S4M) according to some embodiments of the present disclosure;
FIG. 8 shows structural formulas of a photo initiator 651, a thermal initiator DMP-30, and a cationic initiator UV6976 according to some embodiments of the present disclosure;
FIG. 9 is an electro-optical curve of a liquid crystal/polymer composite electrically controlled dimming film according to some embodiments of the present disclosure;
FIG. 10 is a scanning electron microscopic image of a microstructure of a liquid crystal/polymer composite electrically controlled dimming film having a porous polymer matrix and vertically oriented polymer networks according to some embodiments of the present disclosure;
FIG. 11 is a scanning electron microscopic image of a microstructure of a liquid crystal/polymer composite electrically controlled dimming film having a porous polymer matrix and vertically oriented polymer networks according to some embodiments of the present disclosure;
FIG. 12 is a scanning electron microscopic image of a microstructure of a liquid crystal/polymer composite electrically controlled dimming film having a porous polymer matrix and vertically oriented polymer networks according to some embodiments of the present disclosure;
FIG. 13 is an electro-optical curve of a liquid crystal/polymer composite electrically controlled dimming film according to some embodiments of the present disclosure;
FIG. 14 is a scanning electron microscopic image of a microstructure of a liquid crystal/polymer composite electrically controlled dimming film having a porous polymer matrix and vertically oriented polymer networks according to some comparative embodiments of the present disclosure.

### DETAILED DESCRIPTION

In order to more clearly illustrate technical solutions of the embodiments of the present disclosure, the drawings that need to be used in description of the embodiments are briefly introduced in the following. Obviously, the drawings in the following description are only some examples or embodiments of the present disclosure. For those of ordinary skill in the art, without creative effort, the present disclosure can be applied to other similar scenarios according to these drawings. It should be understood that these exemplary embodiments are given only to enable those skilled in the related art to better understand and realize the present disclosure, but not to limit the scope of the present disclosure in any way. Unless it is obvious from the language environment or otherwise stated, same reference numbers in the drawings represent same structures or operations.

A liquid crystal/polymer composite electrically controlled dimming film is provided in some embodiments of the present disclosure. The liquid crystal/polymer composite electrically controlled dimming film may include two layers of laminated conductive substrates. Each layer of the conductive substrates may include a conductive film or a glass substrate containing metal compounds such as ITO, silver, and aluminum. A polymer matrix with a porous microstructure may be sandwiched between the two layers of the conductive substrates and a pore size of the porous microstructure may be in a range of 0.1microns-100 microns. A liquid crystal material may be dispersed in the porous microstructure of the polymer matrix in a form of liquid crystal micro droplets, and vertically oriented polymer networks may be formed in the liquid crystal micro droplets. An expression "vertically oriented" refers to an orientation perpendicular to the conductive substrate.

In some embodiments of the present disclosure, a first step may be used to express a first reaction, and the first reaction includes a first initiator initiating photopolymerization of the first polymerizable monomer. A second step may be used to express a second reaction, and the second reaction includes a second initiator initiating thermal polymerization of the second polymerizable monomer,

The polymer matrix may be prepared by the photopolymerization of the first polymerizable monomer in the first step, and the polymer networks may be prepared by the thermal polymerization of the second polymerizable monomer in the second step, and the second polymerizable monomer is capable of aligning with molecules of the liquid crystal material along a direction of an electric field.

In some embodiments, when the photopolymerization is adopted to prepare the polymer matrix in the first step, the first polymerizable monomer is a radical photopolymerizable monomer or a cationic photopolymerizable monomer.

In some embodiments, the second polymerizable monomer may include a rod-shaped monomer. In some embodiments, a geometric shape of the rod-shaped monomer is a rod shape, but with different lengths and widths. An aspect ratio of the rod-shaped monomer molecule is in a range of 1.1-10. The rod-shaped monomer molecule may have a certain rigidity. Usually, there is a rigid structure at central part of a monomer molecule, and an end of the monomer molecule may include easily polarized groups or flexible chains. In some embodiments, the rigid structure may be a conjugated system formed by a double bond, a triple bond, or a benzene ring. In some embodiments, the rigid structure may include a six-membered ring, a six-membered heterocyclic ring, a five-membered ring, a five-membered heterocyclic ring, a biphenyl, a terphenyl, a naphthalene ring, or an anthracycline. In some embodiments, the rigid structure may include a structure with a large aspect ratio formed by at least two of the six-membered ring, the six-membered heterocycle, the five-membered ring, the five-membered heterocycle, the biphenyl, the terphenyl, the naphthalene, or the anthracycline, which are linked by covalent bonds or linking groups. The linking groups may include a dimethyl, an ester, a vinyl, an ethynyl, an azo, schiff base, etc. In some embodiments, the rod-shaped monomer may also have side groups, which may include a cyangroup, a methoxy, a fluorine, or a chlorine. In some embodiments, the flexible chains (or flexible tail chains) on both sides of the rod-shaped monomer molecule may be carbon chains with odd or even numbers of carbon atoms. In some embodiments, the rod-shaped monomer may include a rod-shaped radical photopolymerizable monomer, a rod-shaped cationic photopolymerizable monomer, or a rod-shaped thermally polymerizable monomer.

In some embodiments, when the thermal polymerization is adopted to prepare the polymer networks in the second step, the second polymerizable monomer is a rod-shaped thermally polymerizable monomer, or the second polymerizable monomer is a combination of the rod-shaped thermally polymerizable monomer and a thermally polymerizable monomer.

In some embodiments, the radical photopolymerizable monomer may be one or more of an acrylate monomer and an ethylenic monomer, and may be radically polymerized under irradiation of ultraviolet light.

In some embodiments, the cationic photopolymerizable monomer is one or more of a vinyl ether monomer, an epoxy monomer and a vinyl monomer, and may be cationic polymerized under irradiation of ultraviolet light.

Depending on different material systems, preferred irradiation intensity and irradiation duration of ultraviolet light are different. In some embodiments, intensity of the ultraviolet light for the photopolymerization may be in a range of 0.01mw/cm²-100 mw/cm². In some embodiments, the intensity of the ultraviolet light for the photopolymerization may be in a range of 0.1mw/cm²-90 mw/cm². In some embodiments, the intensity of the ultraviolet light for the photopolymerization may be in a range of1mw/cm²-200 mw/cm².In some embodiments, the intensity of the ultraviolet light for the photopolymerization may be in a range of5mw/cm²-70 mw/cm².In some embodiments, the intensity of the ultraviolet light for the photopolymerization may be in a range of10mw/cm²-60 mw/cm². In some embodiments, the intensity of the ultraviolet light for the photopolymerization may be in a range of20mw/cm²-50 mw/cm². In some embodiments, the intensity of the ultraviolet light for the photopolymerization may be in a range of30mw/cm²-40 mw/cm². In some embodiments, irradiation duration of the ultraviolet light for the photopolymerization may be in a range of0.1min-60 min. In some embodiments, the irradiation duration of the ultraviolet light of the photopolymerization may be within a range of1min-50 min. In some embodiments, the irradiation duration of the ultraviolet light of the photopolymerization may be in a range of10min-40 min. In some embodiments, the irradiation duration of the ultraviolet light for the photopolymerization may be in a range of20min-30 min. In some embodiments, the intensity of the ultraviolet light for the photopolymerization may be 5.0 mw/cm², and the irradiation duration of the ultraviolet light for the photopolymerization may be 10 min.

In some embodiments, the thermally polymerizable monomer is a mixture of an epoxy monomer and a thiol or amine monomer or a mixture of a rod-shaped monomer containing an amino, a hydroxyl, a carboxyl, or a mercapto and a rod-shaped isocyanate monomer, and may be thermally polymerized under a heating condition.

In some embodiments, the rod-shaped radical photopolymerizable monomer is one or more of a rod-shaped acrylate monomer and a rod-shaped vinyl monomer, and maybe radically polymerized under irradiation of ultraviolet light.

In some embodiments, the rod-shaped cationic photopolymerizable monomer is one or more of a rod-shaped epoxy monomer, a rod-shaped vinyl ether monomer, a rod-shaped vinyl monomer, and maybe cationic polymerized under irradiation of ultraviolet light.

In some embodiments, the rod-shaped thermally polymerizable monomer is a mixture of the rod-shaped epoxy monomer and rod-shaped thiol monomer or a mixture of the rod-shaped monomer containing the amino, the hydroxyl, the carboxyl, or the mercapto and a rod-shaped isocyanate monomer, and may be thermally polymerized under a heating condition.

In some embodiments of the present disclosure, one or more of following structural formulas may be selected for the rod-shaped radical photopolymerizable monomer: 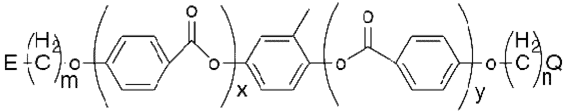 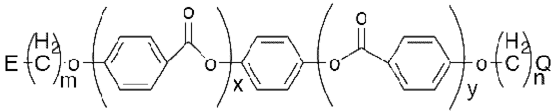 where m and n are 1-20, x and y are 1-2, E and Q are acrylate, epoxy acrylate, or ethylenic functional groups.

In some embodiments of the present disclosure, one or more of following structural formulas may be selected for the rod-shaped cationic photopolymerizable monomer: 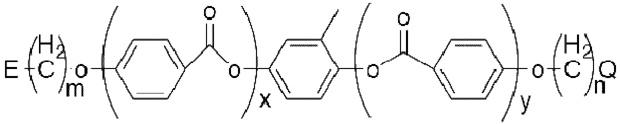 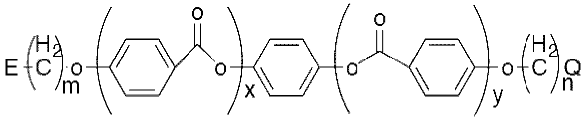 where m and n are 1-20, x and y are 1-2, E and Q are vinyl ether or epoxy functional groups.

One or more of following structural formulas are selected for the rod-shaped epoxy and the rod-shaped mercaptan monomer as the rod-shaped thermal polymerization monomer: 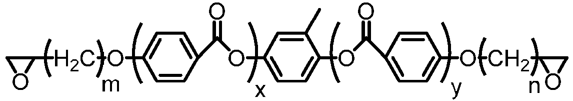 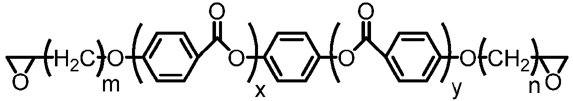 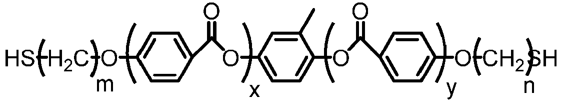 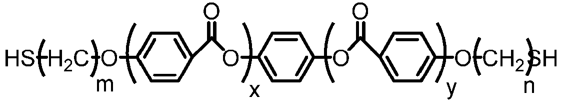 where m and n are 1-20, x and y are 1-2.

In some embodiments, the liquid crystal material may be a cholesteric liquid crystal material with positive dielectric anisotropy, a nematic liquid crystal material, a smectic liquid crystal material, and a liquid crystal material with smectic phase-cholesteric phase transformation characteristic. The nematic liquid crystal material may include, but is not limited to, liquid crystal materials sold in a market, such as SLC-1717, SLC-7011, TEB30A of YongshengHuaqing Liquid Crystal Material Co., ltd., E7, E44, E48, ZLI-1275, etc. of Merck Liquid Crystal Materials Company of Germany. The cholesteric liquid crystal material may be obtained by blending the nematic liquid crystal material with chiral compounds, and the chiral compounds include, but are not limited to, one or more of cholesterylnonanoate, CB15, C15, S811, R811, S1011, R1011, etc.

In some embodiments, a molecular structure of the liquid crystal material maybe as follows: 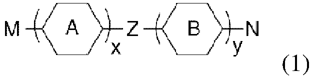 where M and N are alkyl groups containing 1~20 carbon atoms, or alkoxy groups containing 1~20 carbon atoms, siloxane groups, a cyano group, an ester group, a halogen, an isothiocyano group, or a nitro group containing 1~20 carbon atoms. A and B arearomatic rings or alicyclic alkanes, including at least one of six-membered rings, six-membered heterocyclic rings, five-membered rings, five-membered heterocyclic rings, biphenyls, terphenyls, naphthalene rings, and A and B are connected by a covalent bond or a linking group Z. A and B contain side groups or do not contain side groups, and the side groups are halogen, cyano, or methyl.x and y are 0~4 respectively. Z is an ester group, an alkynyl group, an alkane group, anitrogen nitrogen double bond, or an ether bond.

A preparation method of a liquid crystal/polymer composite electrically controlled dimming film is further provided in some embodiments of the present disclosure, which includes following steps.1) A liquid crystal material, a first polymerizable monomer, a second polymerizable monomer, a first initiator, a second initiator, and a spacer particle may be mixed to obtain a homogeneous mixture;2)the mixture may be filled between two layers of laminated conductive substrates to prepare a film, a polymer matrix with a porous microstructure is formed through a first reaction, and the liquid crystal material is dispersed in the polymer matrix in a form of liquid crystal micro droplets; and 3) an electric field is applied to the film to vertically align molecules of the liquid crystal material and molecules of the second polymerizable monomer, and vertically oriented polymer networks are formed in the liquid crystal micro droplets through a second reaction to obtain the liquid crystal/polymer composite electrically controlled dimming film.

The first reaction is a reaction used to prepare the polymer matrix. In some embodiments, the first reaction may include the first initiator initiating the photopolymerization of the first polymerizable monomer.

The second reaction is a reaction used to prepare the polymer networks. In some embodiments, the second reaction may include a second initiator initiating the thermal polymerization of the second polymerizable monomer,

In some embodiments of the present disclosure, a two-step polymerization method formed by the first reaction and the second reaction(i.e., a two-step polymerization method formed by the first step and the second step)is adopted to prepare a liquid crystal/polymer composite electrically controlled dimming film, which has both good mechanical processing properties of a PDLC film and a low driving voltage of the PSLC film, which is characterized in that the vertically oriented polymer networks are formed in the polymer matrix by the two-step polymerization method. The polymer matrix with microstructures ensures the good mechanical processing properties of the liquid crystal/polymer composite electrically controlled dimming film. In addition, the vertically oriented polymer networks in the pores reduce difficulty of orientation of the liquid crystal molecules underaction of an electric field, thereby reducing a driving voltage of the liquid crystal/polymer composite electrically controlled dimming film. It can be understood that the first reaction may be used to prepare the polymer matrix (i.e., the first step is used to prepare the polymer matrix) and the second reaction may be used to prepare the polymer networks (i.e., the second step is used to prepare the polymer networks).

The two-step polymerization method involved in some embodiments of the present disclosure includes photo-thermal two-step polymerization.

The photo-thermal two-step polymerization refers to that the photopolymerization is adopted to prepare the polymer matrix in the first step, and the thermal polymerization is adopted to prepare the polymer networks in the second step. In some embodiments, when the photo-thermal two-step polymerization is adopted, the first polymerizable monomer may be a radical photopolymerizable monomer or a cationic photopolymerizable monomer, and the second polymerizable monomer may be a rod-shaped thermally polymerizable monomer, or a combination of the rod-shaped thermally polymerizable monomer and the thermally polymerizable monomer.

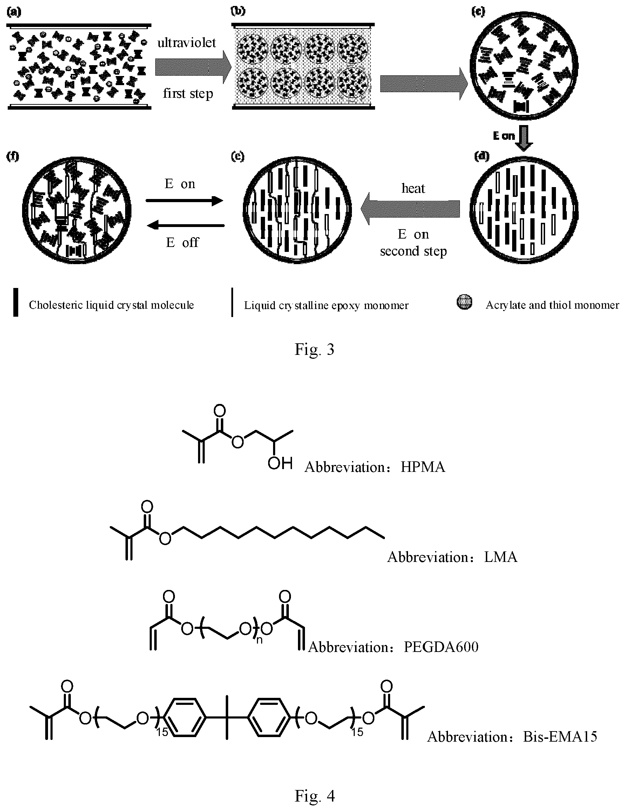

A technical route of composite films prepared by the photo-thermal two-step polymerization may be shown in FIG. 3.

In some embodiments, the liquid crystal material, the first polymerizable monomer, and the second polymerizable monomer for preparing the blending in the step 1) may be10.0-95.0 parts by weight, 5.0-80.0 parts by weight, and 0.1-40.0 parts by weight, respectively.

Because the vertically oriented polymer networks are confined by the pore size of the porous microstructure, the pore size of the micropores in the polymer matrix may be regulated by changing types or proportions of the liquid crystal material and materials in the first polymerizable monomer and the second polymerizable monomer, and thus amount and density of the vertically oriented polymer networks may be further regulated, so that liquid crystal/polymer composite electrically controlled dimming films with different driving voltages and electro-optical properties may be prepared to meet different application requirements.

In practical applications, the pore size of the polymer matrix with microstructures maybe in different ranges, such as 0.1micron-1 micron, 1micron-10 microns, 10microns-20 microns, 20microns-40 microns, 40microns-60 microns, 60microns-80 microns, 80microns-100 microns, and the corresponding vertically oriented polymer networks may also be confined within these pore sizes. In some embodiments, the pore size of the polymer matrix with microstructures may be preferably less than 10 microns.

For the liquid crystal/polymer composite electrically controlled dimming film according to some embodiments of the present disclosure, the liquid crystal material may be dispersed in the polymer matrix in a form of liquid crystal micro droplets, that is, the polymer matrix has a microstructure with a plurality of micropores. The polymer networks in the micro-regions where the liquid crystal micro droplets are located make that the liquid crystal/polymer composite electrically controlled dimming film not only have advantages of the PDLC films (i.e., excellent peel strength and large-area flexible processing), but also have advantages of the PSLC films (i.e., excellent electro-optical properties).

In order to help those skilled in the art to further understand some technical solutions of the present disclosure, the technical solutions for preparing the liquid crystal/polymer composite electrically controlled dimming film in the present disclosure may be further described in detail below through specific embodiments.

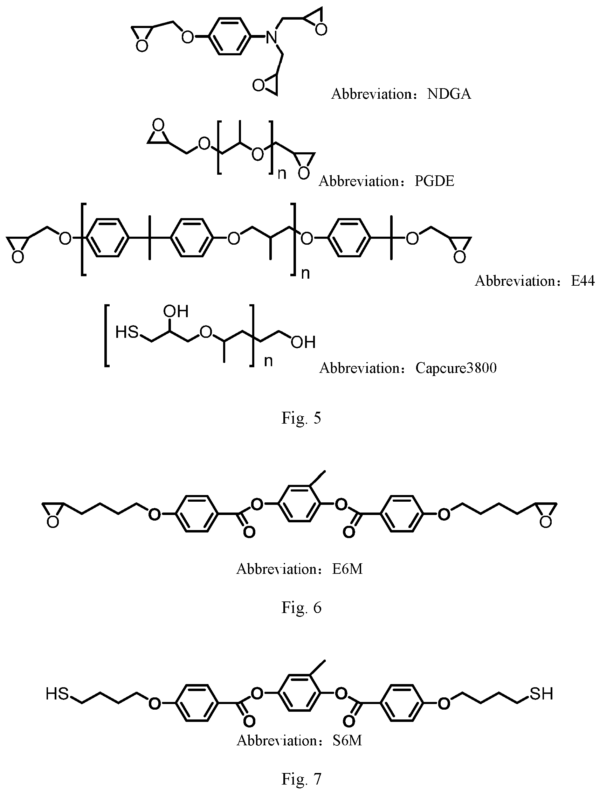

In the following aembodiments1-3 and comparative embodiment 1, a mixture of commercial liquid crystal SLC1717 and chiral compound S811 with a ratio of 94:6 is selected as the cholesteric liquid crystal material. In addition, the following Embodiments 1-3 and comparative embodiment 1are all carried out at room temperature, and abbreviations and structural formulas of the polymerizable monomers (the first polymerizable monomer and the second polymerizable monomer), the initiator (the first initiator and the second initiator) may be shown in Figs 4-8.

### Embodiment 1

The photo-thermal two-step polymerization is adopted in Embodiment 1. Names and proportions of the selected liquid crystal material, the first polymerizable monomer, the second polymerizable monomer, the first initiator, the second initiator, spacer particles are listed in Table 1, with a total mass of a mixture of 15 g. The materials in Table 1 are stirred at room temperature to form isotropic liquid, mixed evenly, sandwiched between two ITO conductive plastic films coated with indium tin oxide, with an area of the ITO conductive plastic film of 0.4*0.4 m², and then rolled evenly to forma film. The first polymerization (photopolymerization) is performed by irradiating the film using ultraviolet light with a wavelength of 365 nm and intensity of 5.0 mw/cm²and with an irradiation duration of 10 min at room temperature. Subsequently, the second polymerization (thermal polymerization) is performed by applying a voltage of 100 V to the film, and then placing the film in an oven at 70 °C for 5 h to obtain the liquid crystal/polymer composite electrically controlled dimming film in the embodiment of the present disclosure.

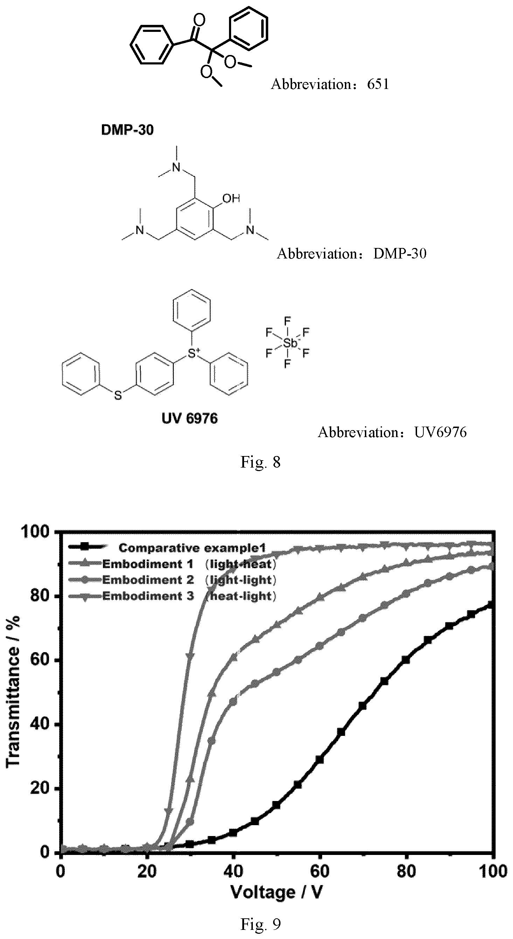

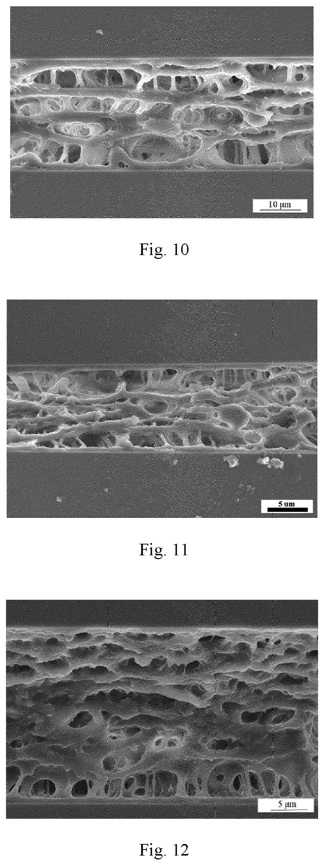

The liquid crystal/polymer composite electrically controlled dimming film prepared by the embodiment 1 is tested using a liquid crystal comprehensive tester to obtain an electro-optical curve as shown in a solid positive triangular curve in FIG. 9. The liquid crystal/polymer composite electrically controlled dimming film may be soaked in cyclohexane to remove the liquid crystal material and then dried, and a scanning electron microscopic image of the processed liquid crystal/polymer composite electrically controlled dimming film may be obtained and shown in FIG. 10.

In FIG. 9, the abscissa represents voltage values, and the ordinate represents transmittance of the liquid crystal/polymer composite electrically controlled dimming film. As shown in FIG. 9, the solid positive triangular curve is the electro-optical curve of the liquid crystal/polymer composite electrically controlled dimming film obtained in Embodiment 1. A driving voltage of the electro-optical curve corresponding to Embodiment 1may be about 25V, and when the voltage is 100V, the transmittance of the liquid crystal/polymer composite electrically controlled dimming film may be 94%. The liquid crystal/polymer composite electrically controlled dimming film obtained in Embodiment 1hasa lower driving voltage.

As shown in FIG. 10, the liquid crystal/polymer composite electrically controlled dimming film obtained by the photo-thermal two-step polymerization in Embodiment 1maybe constructed with the vertically oriented polymer networks in pores of the porous microstructure, with good vertical orientation effect of the polymer networks, and a large amount of the polymer networks existing in the polymerpores.

**Table 1. Proportion table of raw materials in Embodiment1**

| Raw material | | Category | Name | Proportion/% |
|---|---|---|---|---|
| Liquid crystal material | | Liquid crystal material | LC | 58.5 |
| First polymerizable monomer | | Acrylate monomer1 | HPMA | 16.8 |
| | | Acrylate monomer2 | LMA | 11.2 |
| | | Acrylate monomer3 | PEGDA600 | 4.2 |
| | | Acrylate monomer4 | Bis-EMA15 | 2.8 |
| | First initiator | Photoinitiator | 651 | 0.3 |
| | Second initiator | Thermal initiator | DMP-30 | 0.2 |
| Second polymerizable monomer | | Rod-shaped epoxy monomer | E4M | 3.0 |
| | | Rod-shaped thiol monomer | S4M | 3.0 |
| | Spacer particle | Glass bead | glass bead with a diameter of 20 µm | 0.2 |

### Embodiment 2 - not claimed

The photo-photo two-step polymerization is adopted in Embodiment 2. Names and proportions of the selected liquid crystal material, the first polymerizable monomer, the second polymerizable monomer, the first initiator, the second initiator, spacer particles are listed in Table 2, with a total mass of a mixture of 15 g. The materials in Table 2 are stirred at room temperature (25 °C) to form isotropic liquid, mixed evenly, sandwiched between two ITO conductive plastic films coated with indium tin oxide, with an area of the ITO conductive plastic film of 0.4*0.4 m², and then rolled evenly to form a film.. The first polymerization (photopolymerization)is performed by irradiating the film using ultraviolet light with a wavelength of 365 nm and intensity of 5.0 mw/cm²and with an irradiation duration in a range of 3~5 min at room temperature. Subsequently, the second polymerization (photopolymerization)is performed by applying a voltage of 100 V to the film, and then irradiating the film using ultraviolet light with a wavelength of 254 nm and intensity of5.0 mw/cm² under 25°C, and with an irradiation duration of 30 min to obtain the liquid crystal/polymer composite electrically controlled dimming film of the embodiment of the present disclosure.

The liquid crystal/polymer composite electrically controlled dimming film prepared in Embodiment 2 may be tested using a liquid crystal comprehensive tester to obtain an electro-optical curve shown in a solid circular curve in FIG. 9. The liquid crystal/polymer composite electrically controlled dimming film may be soaked in cyclohexane to remove liquid crystal material and then dried, and a scanning electron microscopic image of the processed liquid crystal/polymer composite electrically controlled dimming film may be obtained and shown in FIG.11.

As shown in FIG. 9, the solid circular curve is an electro-optical curve of the liquid crystal/polymer composite electrically controlled dimming film obtained in Embodiment 2, and a driving voltage of the electro-optical curve corresponding to Embodiment 2 is about 25V. When the voltage is 100V, transmittance of the liquid crystal/polymer composite electrically controlled dimming film may be 90%. The liquid crystal/polymer composite electrically controlled dimming film obtained in Embodiment 2 may have a low driving voltage, but its transmittance is lower than that of the liquid crystal/polymer composite electrically controlled dimming film obtained in Embodiment 1 at a same voltage, indicating that the liquid crystal/polymer composite electrically controlled dimming film prepared by adopting the photo-thermal polymerization in Embodiment 1 has better electro-optical performance than that prepared by adopting the photo-photo polymerization in Embodiment 2.

As shown in FIG. 11, the liquid crystal/polymer composite electrically controlled dimming film obtained by adopting the photo-photo two-step polymerization in Embodiment 2may be constructed with the vertically oriented polymer networks in the pores of the porous microstructure.

**Table 2. Proportion table of raw materials in Embodiment 2**

| Raw material | Category | Name | Proporti on/% |
|---|---|---|---|
| Liquid crystal material | Liquid crystal material | LC | 59.5 |
| First polymerizable monomer | Acrylate monomer1 | HPMA | 16.8 |
| | Acrylate monomer2 | LMA | 11.2 |
| | Acrylate monomer3 | PEGDA600 | 4.2 |
| | Acrylate monomer4 | Bis-EMA15 | 2.8 |
| First initiator | Radical initiator | 651 | 0.3 |
| Second initiator | Cationic initiator | UV6976 | 0.2 |
| Second polymerizable monomer | Rod-shaped epoxy monomer | E4M | 5.0 |
| Spacer particle | Glass bead | glass bead with a diameter of 20 µm | 0.2 |

### Embodiment 3 - not claimed.

The thermal-thermal two-step polymerization is adopted in Embodiment 3. Names and proportions of the selected liquid crystal material, the first polymerizable monomer, the second polymerizable monomer, the initiator, spacer particles are listed in Table 3, with a total mass of a mixture of 15 g. The materials in Table 3 are stirred at room temperature (25 °C) to form an isotropic liquid, mixed evenly, sandwiched between two ITO conductive plastic films coated with indium tin oxide, with an area of the ITO conductive plastic film of 0.4*0.4 m², and then rolled evenly to form a film. The first polymerization (thermal polymerization) is performed by placing the film in an oven at 50 °C for 1 h. Subsequently, the second polymerization (thermal polymerization) is performed by applying a voltage of 100 V to the film, and then placing the film in the oven at 80 °C for 5 h to obtain the liquid crystal/polymer composite electrically controlled dimming film in the embodiment of the present disclosure.

The liquid crystal/polymer composite electrically controlled dimming film prepared in Embodiment 3 may be tested using a liquid crystal comprehensive tester to obtain an electro-optical curve shown in the solid inverted triangle curve in FIG. 9. The liquid crystal/polymer composite electrically controlled dimming film may be soaked in cyclohexane to remove liquid crystal material and then dried, and a scanning electron microscopic image of the processed liquid crystal/polymer composite electrically controlled dimming film may be obtained and shown in FIG. 12.

As shown in the solid inverted triangle curve in FIG. 9, a driving voltage of the electro-optical curve corresponding to the liquid crystal/polymer composite electrically controlled dimming film obtained in Embodiment 3may be about 21V. When the voltage is 100V, transmittance of the liquid crystal/polymer composite electrically controlled dimming film may be 97%. The liquid crystal/polymer composite electrically controlled dimming film obtained in Embodiment 3 has a low driving voltage, which is lower than the driving voltage of the liquid crystal/polymer composite electrically controlled dimming film obtained in Embodiment 1 and Embodiment 2, indicating that the liquid crystal/polymer composite electrically controlled dimming film obtained by adopting the thermal-thermal polymerization in Embodiment 3 has a better electro-optical property. However, in a practical production process, a photopolymerization step is more convenient and simpler than a thermal polymerization step. Considering comprehensively, it can be seen that the photo-thermal polymerization in Embodiment 1 is more suitable for practical industrial production than the thermal-thermal polymerization in Embodiment 3.

As shown in FIG. 12, the liquid crystal/polymer composite electrically controlled dimming film obtained by adopting the thermal-thermal two-step polymerization in Embodiment 3maybe constructed with the vertically oriented polymer networks in the pores of the porous microstructure.

**Table 3. Proportion table of raw materials in Embodiment 3**

| Raw material | Category | Name | Proportion/% |
|---|---|---|---|
| Liquid crystal material | Liquid crystal material | LC | 35.8 |
| First polymerizable monomer | Epoxy monomer1 | NDGA | 4.1 |
| | Epoxy monomer2 | PGDE | 12.3 |
| | Epoxy monomer3 | E44 | 4.1 |
| | Epoxy monomer4 | Capcure3800 | 39.0 |
| Initiator | Thermal initiator | DMP-30 | 1.0 |
| Second polymerizable monomer | Rod-shaped epoxy monomer | E4M | 2.0 |
| | Rod-shaped thiol monomer | S4M | 2.0 |
| Spacer particle | Glass bead | glass bead with a diameter of 20 µm | 0.2 |

It should be noted that a preparation route of Embodiment3 is the thermal-thermal two-step polymerization, and the first initiator and the second initiator used for twosteps of thermal initiation polymerization is a same initiator.

### Comparative Embodiment 1

Names and proportions of the selected liquid crystal material, the acrylate monomer, the initiator, the glass microspheres are listed in Table 4, with a total mass of the mixtureof35 g. The materials in Table 4 are stirred at room temperature (25 °C)to form an isotropic liquid, mixed evenly, sandwiched between two ITO conductive plastic films coated with indium tin oxide, with an area of the ITO conductive plastic film of 1*1 m², sandwiched between the two ITO conductive plastic films, and then rolled evenly to form a film. The film is irradiated by ultraviolet light with a wavelength of 365 nm and intensity of5.0 mW/cm²and with an irradiation duration of 10 min at room temperature(25 °C) to obtain the composite film.

**Table 4. Proportion table of raw materials in Comparative Embodiment 1**

| Category | Name | Proportion/% |
|---|---|---|
| Liquid crystal material | LC | 64.7 |
| Acrylate monomer1 | HPMA | 16.8 |
| Acrylate monomer2 | LMA | 11.2 |
| Acrylate monomer3 | PEGDA600 | 4.2 |
| Acrylate monomer4 | Bis-EMA15 | 2.8 |
| Initiator | 651 | 0.3 |
| Glass bead | glass bead with a diameter of 20 µm | 0.2 |

The composite material film prepared by the comparative embodiment 1may be tested using a liquid crystal comprehensive tester to obtain the electro-optical curve as shown in a solid square curve of FIG. 9.

As shown in FIG. 9, the square curve is an electro-optical curve of the liquid crystal/polymer composite electrically controlled dimming film prepared in Comparative Embodiment 1, and a driving voltage of the electro-optical curve corresponding to Comparative Embodiment 1may be about 27V. When the voltage is 100V, transmittance of the liquid crystal/polymer composite electrically controlled dimming film may be 75%. As shown in FIG. 9, by comparing Embodiments 1, 2, and 3 with Comparative Embodiment 1, it can be seen that driving voltages of Embodiments 1, 2 and 3 are significantly lower than that of Comparative Embodiment 1, indicating that some material in some embodiments of the present disclosure have better reduction effect on the driving voltage of the composite electrically controlled dimming film.

### Comparative Embodiment 2

The photo-thermal two-step polymerization is adopted in Comparative Embodiment2. Names and proportions of the selected liquid crystal material, the first polymerizable monomer, the second polymerizable monomer, the first initiator, the second initiator, spacer particles are listed in Table 5, with a total mass of the mixture of15 g. The materials in Table 1 are stirred at room temperature to form an isotropic liquid, mixed evenly, and sandwiched between two ITO conductive plastic films coated with indium tin oxide, an area of the ITO conductive plastic film of 0.4*0.4 m², and rolled evenly to form a film. The first polymerization (photopolymerization)is performed by irradiating the film using ultraviolet light with a wavelength of 365 nm and intensity of 5.0 mw/cm²and with an irradiation duration of 10 min at the room temperature. Subsequently, the second polymerization (thermal polymerization)is performed by applying a voltage of 100 V to the film, and then placing the film in an oven at 70 °C for 5 h to obtain the liquid crystal/polymer composite electrically controlled dimming film in the embodiment of the present disclosure.

The liquid crystal/polymer composite electrically controlled dimming film prepared in Comparative Embodiment 2may be tested by a liquid crystal comprehensive tester to obtain an electro-optical curve as shown in the solid square curve in FIG. 13. The liquid crystal/polymer composite electrically controlled dimming film may be soaked in cyclohexane to remove the liquid crystal material and then dried, and a scanning electron microscopic image of the processed liquid crystal/polymer composite electrically controlled dimming film may be obtained and shown in FIG. 14.

**Table 5. Proportion table of raw materials in Comparative Embodiment 2**

| Raw material | Category | Name | Proportion/% |
|---|---|---|---|
| Liquid crystal material | Liquid crystal material | LC | 58.5 |
| First polymerizable monomer | Acrylate monomer1 | HPMA | 16.8 |
| | Acrylate monomer2 | LMA | 11.2 |
| | Acrylate monomer3 | PEGDA600 | 4.2 |
| | Acrylate monomer4 | Bis-EMA15 | 2.8 |
| First initiator | Photoinitiator | 651 | 0.3 |
| Second initiator | Thermal initiator | DMP-30 | 0.2 |
| Second polymerizable monomer | Rod-shaped epoxy monomer | E4M | 3.0 |
| | Non-rod-shaped thiol monomer | Capcure3800 | 3.0 |
| Spacer particle | Glass bead | glass bead with a diameter of 20 µm | 0.2 |

In FIG.13, the abscissa represents voltage values, and the ordinate represents transmittance of the liquid crystal/polymer composite electrically controlled dimming film. As shown in the solid square curve in FIG. 13, the driving voltage of the electro-optical curve corresponding to Embodiment 1may be about 25V. When the voltage is 100V, the transmittance of the liquid crystal/polymer composite electrically controlled dimming film may be 94%. As shown in the solid circular curve in FIG. 13, a driving voltage of the electro-optical curve corresponding to Comparative Embodiment 2may be about 43V. When the voltage is 100V, transmittance of the liquid crystal/polymer composite electrically controlled dimming film may be 80%.

Comparing Embodiment 1 and Comparative Embodiment 2, it can be seen according to FIG.13that the driving voltage of the composite electrically controlled dimming film prepared in Embodiment 1 is significantly lower than the driving voltage of the composite electronic control dimming film prepared in Comparative Embodiment 2. Therefore, compared with the second polymerizable monomer in Comparative Embodiment 2 only partially including the rod-shaped monomer (i.e., including the rod-shaped epoxy monomer and the non-rod-shaped thiol monomer), the second polymerization monomer in Embodiment 1 all including the rod-shaped monomer (i.e., the rod-shaped epoxy monomer and the rod-shaped mercaptan monomer) has better effect on reducing the driving voltage of the composite electrically controlled dimming film.

Comparing FIG. 14 corresponding to Comparative Embodiment 2 with FIG.10 corresponding to Embodiment 1, in Comparative Embodiment 2, the liquid crystal/polymer composite electrically controlled dimming film is obtained using the second polymerizable monomer including the rod-shaped epoxy monomer and the non-rod-shaped thiol monomer, which cannot be constructed with a large amount of vertically oriented polymer networks well. It shows that in the photo-thermal polymerization the rod-shaped epoxy monomer and the rod-shaped thiol monomer are adopted as the second polymerizable monomer (i.e., the second polymerizable monomers are all the rod-shaped monomers), a large amount of vertically oriented polymer networks with good orientation can be formed, which cause the composite electrically controlled dimming film to have a lower driving voltage and better electro-optical performance.

As can be seen from the above, the rod-shaped epoxy monomer and the non-rod-shaped thiol monomer are used during the second-step polymerization in Comparative Embodiment 2, and a small amount of vertically oriented polymer networks are formed, which causes reduced effect in facilitating orientation of the liquid crystal molecules, thus being not able to reduce the driving voltage well to make its driving voltage higher than the driving voltage of Embodiment 1. In Embodiment 1, the rod-shaped epoxy monomer and the rod-shaped thiol monomer are combined in the second-step polymerization, reaction is not initiated in the ultraviolet light polymerization in the first step for these two monomers, which fully react in the thermal polymerization in the second step, thereby forming a large amount of vertically oriented polymer networks with good orientation. These vertically oriented polymer networks reduce a collective anchoring force of the polymers on liquid crystal molecules when the liquid crystal molecules align with the direction of the electric field during a power-on process of the dimming film, so as to reduce the driving voltage, causing that the composite electrically controlled dimming film prepared in Embodiment 1 has good electro-optical properties.

An existing liquid crystal/polymer composite dimming film preparation is sometimes made using a separate one-step polymerization method, such as the ultraviolet light polymerization or the thermal polymerization. On the one hand, a PDLC porous polymer matrix, which is constructed by the one-step method, may have a large anchoring force on the orientation of liquid crystal molecules, thus increasing a driving voltage required for optical state transition of the film, which is not conducive to practical application. On the other hand, a preparation process and control means of the separate one-step method may be relatively simple, which is not conducive to the regulation of microscopic morphology of the composite dimming film.

The preparation method of the liquid crystal/polymer composite dimming film of some embodiments of the present disclosure adopts the two-step polymerization method. The polymer matrix similar to a porous microstructure of the PDLC in the related art is firstly constructed by polymerization reaction in the first step, and then the vertically oriented polymer networks are constructed in the pores of the porous microstructure through the polymerization reaction in the second step, thereby realizing a unique composite microstructure. On the one hand, the composite microstructure may effectively reduce the anchoring force of the polymer matrix to the orientation of liquid crystal molecules, thereby reducing the driving voltage of the film. On the other hand, the preparation process and control mean of the two-step polymerization method may be more abundant, and the composite microstructure of the film may be regulated by changing the polymerization condition and polymerization process in more detail and effectively.

In addition, different polymer monomer material systems are separately used in the polymerization reaction in the first step and the polymerization reaction in the second in the two-step polymerization method of the liquid crystal/polymer composite dimming film of some embodiments of the present disclosure. For example, in the photo-thermal two-step polymerization, the first polymerizable monomer of the photopolymerization may be theradical photopolymerizable monomer or a cationic photopolymerizable monomer, and the second polymerizable monomer of the thermal polymerizable may be the rod-shaped thermally polymerizable monomer. Therefore, in the photopolymerization in the first step, the second polymerizable monomer may not participate in the reaction, which may ensure that the polymerization in the first step is separated from the polymerization in the second. On the basis, by controlling the polymerization condition of the polymerization in the first step (the intensity of ultraviolet light, irradiation duration, etc.), the first polymerizable monomer may be fully reacted, and small molecule monomers are not remained in the system to damage various properties of the film. At the same time, the second polymerizable monomer may not participate in the polymerization in the first step, which ensures that the porous polymer matrix formed after the polymerization in the first step may not contain rod-shaped or liquid crystal monomer molecules, that is, the porous polymer matrix has a lower anchoring force to liquid crystal molecules and has better effect on reducing the driving voltage.

Basic concepts have been described in the above, it may be rather apparent to those skilled in the art after reading this detailed disclosure that the foregoing detailed disclosure is intended to be presented by way of example only and isn't limiting. Various alterations, improvements, and modifications may occur and are intended to those skilled in the art, though not expressly stated herein. These alterations, improvements, and modifications are intended to fall within the scope of the appended claims.

## Claims

1. A liquid crystal/polymer composite electrically controlled dimming film, comprising:
a liquid crystal material, a polymer matrix, and two layers of Indium tin oxide (ITO) conductive films, wherein
the polymer matrix is sandwiched between the two layers of ITO conductive films, and the polymer matrix has a porous microstructure; and
the liquid crystal material is dispersed in the polymer matrix to form liquid crystal micro droplets, and the liquid crystal micro droplets have vertically oriented polymer networks,
wherein the liquid crystal material is a cholesteric liquid crystal material with positive dielectric anisotropy, a nematic liquid crystal, a smectic liquid crystal, or a liquid crystal material with smectic phase-cholesteric phase transformation characteristic,
wherein the polymer matrix is prepared by photopolymerization of a first polymerizable monomer, the polymer networks are prepared by thermal polymerization of a second polymerizable monomer, the second polymerizable monomer is capable of aligning with molecules of the liquid crystal material along a direction of an electric field,
wherein the first polymerizable monomer is a radical photopolymerizable monomer or a cationic photopolymerizable monomer, the second polymerizable monomer is a rod-shaped thermally polymerizable monomer,
wherein the radical photopolymerizable monomer is one or more of an acrylate monomer or a vinyl monomer that is capable of being radically polymerized under irradiation of ultraviolet light; the cationic photopolymerizable monomer is one or more of a vinyl monomer, a vinyl ether monomer, or an epoxy monomer that is capable of being cationic polymerized under irradiation of ultraviolet light; the rod-shaped thermally polymerizable monomer is a mixture of the rod-shaped epoxy monomer and a rod-shaped thiol monomer or a rod-shaped amine monomer that is capable of being thermally polymerized under a heating condition, or a mixture of a rod-shaped monomer containing the amino, the hydroxyl, the carboxyl, or the mercapto and a rod-shaped isocyanate monomer;
wherein the rod-shaped epoxy monomer and rod-shaped thiol monomer are selected from one or more of the following structural formulas, respectively: 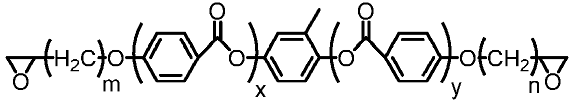 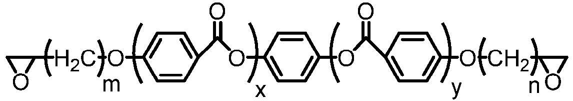 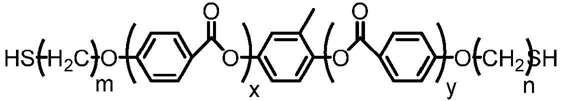 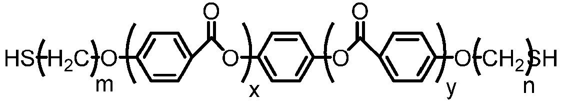
wherein m and n are 1-20, and x and y are 1-2.

2. The liquid crystal/polymer composite electrically controlled dimming film according to claim 1, wherein the liquid crystal material comprises one or more of a molecular structure (1): 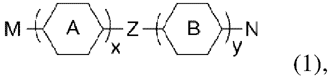 where M and N are alkyl groups containing 1-20 carbon atoms, alkoxy groups containing 1-20 carbon atoms, or siloxane group, cyan group, ester group, halogen, isothiocyano group, or nitro group containing 1-20 carbon atoms; A and B are aromatic rings or alicyclic alkane containing at least one of a benzene ring, a six-membered ring, a six-membered heterocyclic ring, a five-membered ring, a five-membered heterocyclic ring, a biphenyl, a terphenyl, a naphthalene ring; A and B are connected by a covalent bond or a linking group Z; A and B contain side groups or do not contain side groups, and the side groups are halogen, cyan group, or methyl; x and y are values in a range of 0-4;and Z is an ester group, an alkynyl group, an alkane group, a nitrogen-nitrogen double bond, or an ether bond.

3. The liquid crystal/polymer composite electrically controlled dimming film according to claim 1, wherein a pore size of a micropore in the polymer matrix is within a range of 0.1 microns-100 microns.

4. The liquid crystal/polymer composite electrically controlled dimming film according to claim 1, wherein each of the conductive substrates comprises a conductive film or a glass substrate containing metal compounds including Indium tin oxide (ITO), silver, and aluminum.

5. A preparation method of a liquid crystal/polymer composite electrically controlled dimming film, comprising:
1) mixing a liquid crystal material, a first polymerizable monomer, a second polymerizable monomer, a first initiator, a second initiator, and a spacer particle to obtain a homogeneous mixture;
2) filling the mixture between two layers of laminated conductive substrates to prepare a film, forming a polymer matrix with a porous microstructure through a first reaction, and dispersing the liquid crystal material in the polymer matrix in a form of liquid crystal micro droplets; and
3) applying an electric field to the film to vertically align molecules of the liquid crystal material and molecules of the second polymerizable monomer, and forming vertically oriented polymer networks in the liquid crystal micro droplets through a second reaction to obtain the liquid crystal/polymer composite electrically controlled dimming film,
in steps 1) -3) above:
the first polymerizable monomer is a radical photopolymerizable monomer or a cationic photopolymerizable monomer, the second polymerizable monomer is a rod-shaped thermally polymerizable monomer.

6. The preparation method of the liquid crystal/polymer composite electrically controlled dimming film according to claim 5, wherein
the radical photopolymerizable monomer is one or more of an acrylate monomer or a vinyl monomer that is capable of being radically polymerized under irradiation of ultraviolet light;
the cationic photopolymerizable monomer is one or more of a vinyl monomer, a vinyl ether monomer, or an epoxy monomer that is capable of being cationic polymerized under irradiation of ultraviolet light;
the rod-shaped radical photopolymerizable monomer is one or more of a rod-shaped acrylate monomer or a rod-shaped vinyl monomer that is capable of being radically polymerized under irradiation of ultraviolet light;
the rod-shaped cationic photopolymerizable monomer is one or more of a rod-shaped epoxy monomer, a rod-shaped vinyl ether monomer, or a rod-shaped vinyl monomer that is capable of being cationic polymerized under irradiation of ultraviolet light;
the thermally polymerizable monomer is a mixture of an epoxy monomer and a thiol or amine monomer that is capable of being thermally polymerized under a heating condition, or a mixture of a monomer containing an amino, a hydroxyl, a carboxyl, or a mercapto and an isocyanate monomer; and
the rod-shaped thermally polymerizable monomer is a mixture of the rod-shaped epoxy monomer and a rod-shaped thiol monomer or a rod-shaped amine monomer that is capable of being thermally polymerized under a heating condition, or a mixture of a rod-shaped monomer containing the amino, the hydroxyl, the carboxyl, or the mercapto and a rod-shaped isocyanate monomer.

7. The preparation method of the liquid crystal/polymer composite electrically controlled dimming film according to claim 5, wherein the liquid crystal material, the first polymerizable monomer, and the second polymerizable monomer are of 10.0-95.0 parts by weight, 5.0-80.0 parts by weight, and 0.1-40.0 parts by weight, respectively.

## Patentansprüche

1. Elektrisch gesteuerte Dimmfolie aus einem Flüssigkristall/Polymer-Verbund, **dadurch gekennzeichnet, dass** sie ein Flüssigkristallmaterial, eine Polymermatrix und zwei Schichten aus leitfähiger Indiumzinnoxid (ITO)-Folie umfasst, wobei
die Polymermatrix zwischen den beiden Schichten aus leitfähiger ITO-Folie angeordnet ist und die Polymermatrix eine poröse Mikrostruktur aufweist; und
das Flüssigkristallmaterial in der Polymermatrix dispergiert ist, um Flüssigkristalltröpfchen zu bilden, wobei in den Flüssigkristalltröpfchen ein vertikal ausgerichtetes Polymernetzwerk vorhanden ist,
wobei es sich bei dem Flüssigkristallmaterial um ein cholesterisches Flüssigkristallmaterial mit positiver dielektrischer Anisotropie, ein nematisches Flüssigkristall, ein smektisches Flüssigkristall oder ein Flüssigkristallmaterial mit smektisch-cholesterischer Phasenumwandlungseigenschaft handelt,
wobei die Polymermatrix durch Photopolymerisation eines ersten polymerisierbaren Monomers hergestellt wird und das Polymernetzwerk durch Thermopolymerisation eines zweiten polymerisierbaren Monomers hergestellt wird, wobei das zweite polymerisierbare Monomer in der Lage ist, sich mit Molekülen des Flüssigkristallmaterials entlang der Richtung des elektrischen Feldes auszurichten,
wobei es sich bei dem ersten polymerisierbaren Monomer um ein radikalisch photopolymerisierbares Monomer oder um ein kationisch photopolymerisierbares Monomer handelt und bei dem zweiten polymerisierbaren Monomer um ein stabförmiges, thermopolymerisierbares Monomer handelt,
wobei das radikalisch photopolymerisierbare Monomer eine oder mehrere Arten aus Acrylatmonomer oder Olefinmonomer ist, das unter UV-Bestrahlung radikalisch polymerisierbar ist; das kationisch photopolymerisierbare Monomer eine oder mehrere Arten aus Olefinmonomer, Vinylethermonomer oder Epoxymonomer ist, das unter UV-Bestrahlung kationisch polymerisierbar ist; das stabförmige, thermopolymerisierbare Monomer eine Mischung aus einem stabförmigen Epoxidmonomer und einem stabförmigen Thiolmonomer oder einem stabförmigen Aminmonomer ist, das unter Erhitzungsbedingungen thermisch polymerisierbar ist, oder eine Mischung aus einem stabförmigen Monomer mit Amino-, Hydroxyl-, Carboxyl- oder Mercaptangruppen und einem stabförmigen Isocyanatmonomer ist;
wobei das stabförmige Epoxidmonomer und das stabförmige Thiolmonomer jeweils aus einer oder mehreren der folgenden Strukturformeln ausgewählt sind: 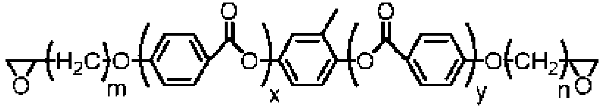 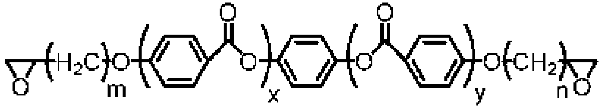 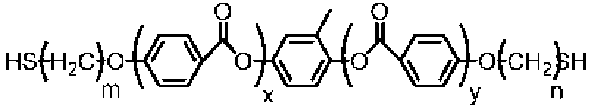 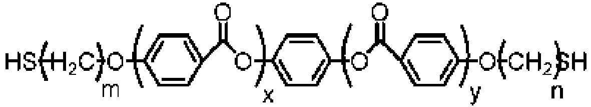
wobei m und n 1-20 sind und x und y 1-2 sind.

2. Elektrisch gesteuerte Dimmfolie aus einem Flüssigkristall/Polymer-Verbund nach Anspruch 1, **dadurch gekennzeichnet, dass** das Flüssigkristallmaterial eine oder mehrere der folgenden Molekülstrukturen (1) umfasst: 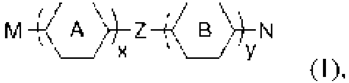 wobei M und N eine Alkylgruppe mit 1 bis 20 Kohlenstoffatomen, eine Alkoxygruppe mit 1 bis 20 Kohlenstoffatomen oder eine Siloxangruppe mit 1 bis 20 Kohlenstoffatomen, eine Cyanogruppe, eine Estergruppe, Halogene, eine Isothiocyanatogruppe oder eine Nitrogruppe darstellen; A und B aromatische Ringe oder alicyclische Alkane darstellen, die mindestens einen der folgenden Ringe enthalten: einen Benzolring, einen sechsgliedrigen Ring, einen sechsgliedrigen heterocyclischen Ring, einen fünfgliedrigen Ring, einen fünfgliedrigen heterocyclischen Ring, einen Biphenylring, einen Terphenyllring oder einen Naphthalinring; A und B über eine kovalente Bindung oder eine Verbindungsgruppe Z verbunden sind; A und B Seitengruppen enthalten oder keine Seitengruppen aufweisen, wobei die Seitengruppen Halogene, Cyanogruppen oder Methylgruppen sind; x und y im Bereich von 0 bis 4 liegen; und Z eine Estergruppe, Alkingruppe, Alkangruppe, Stickstoff-Stickstoff-Doppelbindung oder Etherbindung ist.

3. Elektrisch gesteuerte Dimmfolie aus einem Flüssigkristall/Polymer-Verbund nach Anspruch 1, **dadurch gekennzeichnet, dass** die Porengröße der Mikroporen in der Polymermatrix im Bereich von 0,1 Mikrometern bis 100 Mikrometern liegt.

4. Elektrisch gesteuerte Dimmfolie aus einem Flüssigkristall/Polymer-Verbund nach Anspruch 1, **dadurch gekennzeichnet, dass** jedes leitfähige Substrat eine leitfähige Folie oder ein Glassubstrat umfasst, welches Metallverbindungen aus Indiumzinnoxid (ITO), Silber und Aluminium enthält.

5. Verfahren zur Herstellung einer elektrisch gesteuerten Dimmfolie aus einem Flüssigkristall/Polymer-Verbund, **dadurch gekennzeichnet, dass** es Folgendes umfasst:
1) Mischen von Flüssigkristallmaterial, einem ersten polymerisierbaren Monomer, einem zweiten polymerisierbaren Monomer, einem ersten Initiator, einem zweiten Initiator und Abstandshalterpartikeln, um eine homogene Mischung zu erhalten;
2) Einfüllen der Mischung zwischen zwei laminierte leitfähige Substrate, um einen Film herzustellen, Bilden einer Polymermatrix mit einer porösen Mikrostruktur durch eine erste Reaktion und Dispergieren des Flüssigkristallmaterials in Tröpfchenform in der Polymermatrix; und
3) Anlegen eines elektrischen Feldes an den Film, um Moleküle des Flüssigkristallmaterials und des zweiten polymerisierbaren Monomers vertikal auszurichten, und Bilden eines vertikal ausgerichteten Polymernetzwerks in den Flüssigkristalltröpfchen durch eine zweite Reaktion, wodurch die elektrisch gesteuerte Dimmfolie aus einem Flüssigkristall/Polymer-Verbund erhalten wird.
In den obigen Schritten 1) bis 3):
es sich bei dem ersten polymerisierbaren Monomer um ein radikalisch photopolymerisierbares Monomer oder um ein kationisch photopolymerisierbares Monomer handelt und bei dem zweiten polymerisierbaren Monomer um ein stabförmiges, thermopolymerisierbares Monomer handelt,

6. Verfahren zur Herstellung einer elektrisch gesteuerten Dimmfolie aus einem Flüssigkristall/Polymer-Verbund nach Anspruch 5, **dadurch gekennzeichnet, dass**
das radikalisch photopolymerisierbare Monomer eine oder mehrere Arten aus Acrylatmonomer oder Olefinmonomer ist, das unter UV-Bestrahlung radikalisch polymerisierbar ist;
das kationisch photopolymerisierbare Monomer eine oder mehrere Arten aus Olefinmonomer, Vinylethermonomer oder Epoxymonomer ist, das unter UV-Bestrahlung kationisch polymerisierbar ist;
das stabförmige, radikalisch photopolymerisierbare Monomer eine oder mehrere Arten aus stabförmigem Acrylatmonomer oder stabförmigem Olefinmonomer ist, das unter UV-Bestrahlung radikalisch polymerisierbar ist;
das stabförmige, kationisch photopolymerisierbare Monomer eine oder mehrere Arten aus stabförmigem Epoxymonomer, stabförmigem Vinylethermonomer oder stabförmigem Olefinmonomer ist, das unter UV-Bestrahlung kationisch polymerisierbar ist;
das thermopolymerisierbare Monomer eine Mischung aus einem Epoxidmonomer und einem Thiolmonomer oder einem Aminmonomer, das unter Erhitzungsbedingungen thermisch polymerisierbar ist, oder eine Mischung aus einem Monomer mit Amino-, Hydroxyl-, Carboxyl- oder Mercaptangruppen und einem Isocyanatmonomer ist; und
das stabförmige, thermopolymerisierbare Monomer eine Mischung aus einem stabförmigen Epoxidmonomer und einem stabförmigen Thiolmonomer oder einem stabförmigen Aminmonomer ist, das unter Erhitzungsbedingungen thermisch polymerisierbar ist, oder eine Mischung aus einem stabförmigen Monomer mit Amino-, Hydroxyl-, Carboxyl- oder Mercaptangruppen und einem stabförmigen Isocyanatmonomer ist.

7. Verfahren zur Herstellung einer elektrisch gesteuerten Dimmfolie aus einem Flüssigkristall/Polymer-Verbund nach Anspruch 5, **dadurch gekennzeichnet, dass** die Mengen des Flüssigkristallmaterials, des ersten polymerisierbaren Monomers und des zweiten polymerisierbaren Monomers jeweils 10,0 bis 95,0 Gewichtsanteile, 5,0 bis 80,0 Gewichtsanteile und 0,1 bis 40,0 Gewichtsanteile betragen.

## Revendications

1. Film composite cristaux liquides/polymère de gradation à commande électrique, **caractérisé en ce qu'**il comprend : un matériau à cristaux liquides, une matrice polymérique et deux couches de film conducteur en oxyde d'étain et d'indium (ITO), dans lequel
la matrice polymérique est prise en sandwich entre les deux couches de film conducteur ITO, et la matrice polymérique présente une microstructure poreuse ; et
le matériau à cristaux liquides est dispersé dans la matrice polymérique afin de former des gouttelettes de cristaux liquides, et les gouttelettes de cristaux liquides contiennent un réseau polymère orienté verticalement,
dans lequel le matériau à cristaux liquides comprend un matériau à cristaux liquides cholestériques présentant une anisotropie diélectrique positive, des cristaux liquides nématiques, des cristaux liquides smectiques ou un matériau à cristaux liquides présentant des caractéristiques de transition smectique-cholestérique ;
dans lequel la matrice polymérique est préparée par photopolymérisation d'un premier monomère polymérisable, et le réseau polymère est préparé par thermopolymérisation d'un second monomère polymérisable, et le second monomère polymérisable peut s'aligner avec des molécules de matériau à cristaux liquides le long d'une direction du champ électrique,
dans lequel le premier monomère polymérisable est un monomère photopolymérisable radicalaire ou un monomère photopolymérisable cationique, et le second monomère polymérisable est un monomère thermopolymérisable en forme de bâtonnet ;
dans lequel le monomère photopolymérisable radicalaire comprend l'un ou plusieurs d'un monomère d'ester acrylique ou d'un monomère oléfinique, qui peut subir une polymérisation radicalaire sous irradiation ultraviolette ; le monomère photopolymérisable cationique comprend l'un ou plusieurs d'un monomère oléfinique, d'un monomère d'éther vinylique ou d'un monomère époxy, qui peut subir une polymérisation cationique sous irradiation ultraviolette ; le monomère thermopolymérisable en forme de bâtonnet est un mélange de monomère époxy en forme de bâtonnet et de monomère thiol en forme de bâtonnet ou de monomère amine en forme de bâtonnet, qui peut subir une thermopolymérisation dans des conditions de chauffage, ou un mélange de monomère en forme de bâtonnet contenant des groupes amino, hydroxyle, carboxyle ou mercaptan et de monomère d'isocyanate en forme de bâtonnet ;
dans lequel le monomère époxy en forme de bâtonnet et le monomère thiol en forme de bâtonnet sont chacun l'une ou plusieurs choisies parmi des formules développées suivantes : 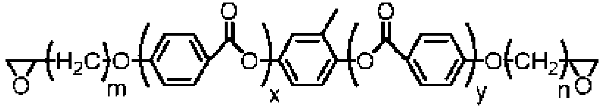 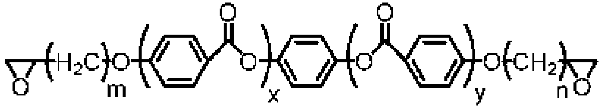 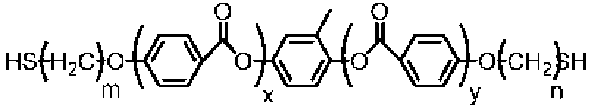 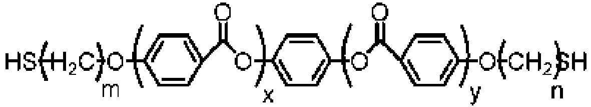
dans lequel m et n sont chacun compris entre 1 et 20, et x et y sont chacun compris entre 1 et 2.

2. Film composite cristaux liquides/polymère de gradation à commande électrique selon la revendication 1, **caractérisé en ce que**, le matériau à cristaux liquides comprend l'une ou plusieurs des structures moléculaires suivantes (1) : 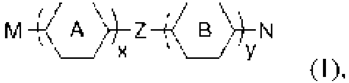 dans lequel M et N sont un groupe alkyle contenant 1 à 20 atomes de carbone, un groupe alcoxy contenant 1 à 20 atomes de carbone, ou un groupe siloxane, un groupe cyano, un groupe ester, un halogène, un groupe d'isothiocyanate ou un groupe nitro contenant 1 à 20 atomes de carbone ; A et B sont des cycles aromatiques ou alicycliques contenant au moins l'un parmi un cycle benzénique, un cycle à 6 chaînons, un hétérocycle à 6 chaînons, un cycle à 5 chaînons, un hétérocycle à 5 chaînons, un biphényle, un triphényle ou un cycle naphtalène ; A et B sont reliés par une liaison covalente ou un groupe de liaison Z ; A et B peuvent contenir ou ne pas contenir de groupes latéraux, les groupes latéraux étant des groupes halogène, cyano ou méthyle ; la plage de valeurs de x et de y est comprise entre 0 et 4 ; et Z est un groupe ester, un groupe alcyne, un groupe alcane, une double liaison azote-azote ou une liaison éther.

3. Film composite cristaux liquides/polymère de gradation à commande électrique selon la revendication 1, **caractérisé en ce que**, la taille des micropores dans la matrice polymérique est comprise dans une plage allant de 0,1 micromètre à 100 micromètres.

4. Film composite cristaux liquides/polymère de gradation à commande électrique selon la revendication 1, **caractérisé en ce que**, chaque substrat conducteur comprend un film conducteur ou un substrat en verre contenant des composés métalliques d'oxyde d'étain et d'indium (ITO), d'argent et d'aluminium.

5. Procédé de préparation d'un film composite cristaux liquides/polymère de gradation à commande électrique, **caractérisé en ce qu'**il comprend les étapes consistant à :
1) mélanger un matériau à cristaux liquides, un premier monomère polymérisable, un second monomère polymérisable, un premier initiateur, un second initiateur et des particules, afin d'obtenir un mélange homogène ;
2) remplir le mélange entre deux substrats conducteurs stratifiés afin de préparer un film, dans lequel une matrice polymérique ayant une microstructure poreuse est formée via une première réaction, et le matériau à cristaux liquides est dispersé dans la matrice polymérique sous forme de gouttelettes ; et
3) appliquer un champ électrique au film pour aligner verticalement des molécules du matériau à cristaux liquides et le second monomère polymérisable, et former un réseau polymère aligné verticalement dans les gouttelettes de cristaux liquides via une second réaction, afin d'obtenir un film composite cristaux liquides/polymère de gradation à commande électrique,
dans lequel, aux étapes 1) à 3) ci-dessus :
le premier monomère polymérisable est un monomère photopolymérisable radicalaire ou un monomère photopolymérisable cationique, et le second monomère polymérisable est un monomère thermopolymérisable en forme de bâtonnet.

6. Procédé de préparation d'un film composite cristaux liquides/polymère de gradation à commande électrique selon la revendication 5, **caractérisé en ce que**,
le monomère photopolymérisable radicalaire comprend l'un ou plusieurs d'un monomère d'ester acrylique ou d'un monomère oléfinique, qui peut subir une polymérisation radicalaire sous irradiation ultraviolette ;
le monomère photopolymérisable cationique comprend l'un ou plusieurs d'un monomère oléfinique, d'un monomère d'éther vinylique ou d'un monomère époxy, qui peut subir une polymérisation cationique sous irradiation ultraviolette ;
le monomère photopolymérisable radicalaire en forme de bâtonnet comprend l'un ou plusieurs d'un monomère d'ester acrylique en forme de bâtonnet ou d'un monomère oléfinique en forme de bâtonnet, qui peut subir une polymérisation radicalaire sous irradiation ultraviolette ;
le monomère photopolymérisable cationique en forme de bâtonnet comprend l'un ou plusieurs d'un monomère époxy en forme de bâtonnet, d'un monomère d'éther vinylique en forme de bâtonnet ou d'un monomère oléfinique en forme de bâtonnet, qui peut subir une polymérisation cationique sous irradiation ultraviolette ;
le monomère thermopolymérisable est un mélange de monomère époxy et de monomère thiol ou amine, qui peut subir une thermopolymérisation dans des conditions de chauffage, ou un mélange de monomère contenant des groupes amino, hydroxyle, carboxyle ou mercaptan et de monomère d'isocyanate ; et
le monomère thermopolymérisable en forme de bâtonnet est un mélange de monomère époxy en forme de bâtonnet et de monomère thiol en forme de bâtonnet ou de monomère amine en forme de bâtonnet, qui peut subir une thermopolymérisation dans des conditions de chauffage, ou un mélange de monomère en forme de bâtonnet contenant des groupes amino, hydroxyle, carboxyle ou mercaptan et de monomère d'isocyanate en forme de bâtonnet.

7. Procédé de préparation d'un film composite cristaux liquides/polymère de gradation à commande électrique selon la revendication 5, **caractérisé en ce que**, les quantités du matériau à cristaux liquides, du premier monomère polymérisable et du second monomère polymérisable sont respectivement de 10,0 à 95,0 parties en poids, de 5,0 à 80,0 parties en poids et de 0,1 à 40,0 parties en poids.
